# EUROPÄISCHE PATENTSCHRIFT

(11) **EP 1 234 231 B1**
(45) Veröffentlichungstag und Bekanntmachung des Hinweises auf die Patenterteilung: **07.05.2003**
(21) Anmeldenummer: 00993286.4
(22) Anmeldetag: 28.11.2000
(51) Int. Cl.: G06F 9/44

(54) **VERFAHREN ZUR ERZEUGUNG GRAFISCHER BENUTZERSCHNITTSTELLEN FÜR COMPUTERPROGRAMME**
METHOD FOR GENERATING GRAPHICAL USER INTERFACES FOR COMPUTER PROGRAMS
PROCEDE PERMETTANT DE PRODUIRE DES INTERFACES UTILISATEUR GRAPHIQUES POUR DES PROGRAMMES INFORMATIQUES

(30) Priorität: 01.12.1999 DE 19957883
(43) Veröffentlichungstag der Anmeldung: 28.08.2002
(73) Patentinhaber: Jeschke, Roland, 55444 Schweppenhausen (DE)
(72) Erfinder: Jeschke, Roland, 55444 Schweppenhausen (DE)
(74) Vertreter: Beck, Alexander, Dipl.-Ing.
(86) Internationale Anmeldenummer: DE0004233
(87) Internationale Veröffentlichungsnummer: WO01040930

(56) Entgegenhaltungen:
- US-A- 5 509 116
- US-A- 5 892 510

## Beschreibung

Die vorliegende Erfindung betrifft ein Verfahren zur Erzeugung grafischer Benutzerschnittstellen für Computerprogramme.

Die Erzeugung solcher grafischer Benutzerschnittstellen wird immer wichtiger, da zunehmend bei allen Anwendungen von den Nutzern solche grafischen Oberflächen erwartet werden. Bisher war die Programmierung solcher grafischer Benutzerschnittstellen sehr umständlich und zeitaufwendig.

Der nächstgelegene Stand der Technik hinsichtlich der Erzeugung graphischer Benutzerschnittstellen für Computerprogramme wird von der US 5,509,116 gebildet. Diese Druckschrift beschreibt ein System zur Verwaltung graphischer Benutzerschnittstellen. Dieses setzt als wesentlichen Bestandteil einen "Application Logic Enabrer" (ALE) voraus, der aus einem Satz von Anwendungsprogrammen besteht, die ihre Funktionalität über eine eigene Benutzerschnittstelle bereitstellen. Hauptfunktion dieses Verfahrens gemäß dem Stand der Technik ist es, Interaktionen des Benutzers mit diesen Anwendungsprogrammen auf Betriebssystemebene mitzuschneiden, diese Mitschnitte zu verwalten, zu Stories zu kombinieren, mit einer neuen graphischen Benutzerschnittstelle zu verknüpfen und abhängig von Benutzereingaben wieder abzuspielen (Event Playback Section). Auf diese Art werden bei dem genannten Stand der Technik existierende Anwendungsprogramme durch eine graphische Benutzerschnittstelle gekapselt. Auch dieses Verfahren gemäß dem Stand der Technik verwendet ein relationales Datenbankmodell, um die Regeln abzulegen, nach denen die graphische Benutzerschnittstelle aufgebaut und interpretiert werden soll.

weiterer Stand der Technik hinsichtlich der Erzeugung von graphischen Benutzerschnittstellen findet sich in der US 5,892,510. Diese beschreibt Feldobjekte und ein Verfahren zur Entwicklung einer graphischen Benutzerschnittstelle, die diese Feldobjekte enthält. Dabei wird ein Verfahren beschrieben, das dazu dient, objektorientiertes Sourcecoding zu generieren, das nach dem Übersetzen und Binden als Programm ausgeführt werden kann. Dabei werden ebenfalls Anzeige-Elemente der graphischen Benutzeroberfläche mit Spalten von Datenbanktabellen assoziiert.

Ausgehend von diesem Stand der Technik ist es Aufgabe der vorliegenden Erfindung, eine graphische Benutzeroberfläche und ihre Beziehung zu den verwalteten Daten und ihren Funktionen allein durch Tabelleneinträge zu ermöglichen, und so die Erstellung einer solchen graphischen Benutzerschnittstelle im wesentlichen automatisierbar und gleichzeitig erheblich vereinfacht und beschleunigt zu gestalten.

Erfindungsgemäß wird diese Aufgabe dadurch gelöst, daß ein Verfahren zur Erzeugung graphischer Benutzerschnittstellen für Computerprogramme angegeben wird, bei dem die graphischen Benutzerschnittstellen vollständig aufgrund von in einer Datenbank abgelegten Regeln erzeugt werden und jeder Programmzustand der graphischen Benutzerschnittstelle durch eine Menge von Listen, die die Anzeige-Elemente und deren Inhalt repräsentieren, eine hierarchische Ordnung, die den Einträgen in einer Liste aus der Menge von Listen andere Listen aus der Menge von Listen zuordnet und so das "Enthaltensein" von Anzeige-Elementen ineinander repräsentiert, und eine Beziehung zwischen den Einträgen in den Listen der Menge von Listen, die festlegt, welches Anzeigeelement von dem Inhalt welches anderen, übergeordneten Anzeige-Elementes abhängt, festgelegt ist.

Vorteilhafte Weiterbildungen der Erfindung sind in den Unteransprüchen beschrieben.

Die vorliegende Erfindung wird anhand des im folgenden beschriebenen Ausführungsbeispiels, welches auch in der Zeichnung dargestellt ist, näher erläutert. Es zeigt:
Figur 1 beispielhaft eine mit dem erfindungsgemäßen Verfahren erzeugte Programmoberfläche (Darstellung auf dem Bildschirm) ;
Figur 2 ein erfindungsgemäßes Datenmodell für die Daten der beispielhaften Programmoberfläche;
Figur 3 ein erfindungsgemäßes Datenmodell für die Regeln der beispielhaften Programmoberfläche; und
Figur 4 die erfindungsgemäßen Programmzustände der beispielhaften Programmoberfläche.

Das erfindungsgemäße Verfahren erlaubt die vollständige Generierung grafischer Programmoberflächen aufgrund von in einer Datenbank abgelegten Regeln. Es ist vorzugsweise anwendbar, wenn die zu verarbeitenden Daten in einer Datenbank gespeichert sind, und die Verarbeitungsfunktionalität der gewünschten Applikation ebenfalls in der Datenbank abgebildet ist (in einer ORACLE-Datenbank würde das beispielsweise durch Tabellen, Tabelleninhalte, Constraints, Functions, Stored Procedures und Packages erreicht). Das Verfahren ist somit besonders geeignet für die Erstellung klassischer Client-Server-Systeme.

Grundlage des erfindungsgemäßen Verfahrens ist der Ansatz, die Programmoberfläche mit allen enthaltenen Anzeige-Elementen vollständig anhand von Regeln aus Steuertabellen der Datenbank zu laden. Die Struktur und der Inhalt dieser Tabellen legen fest, wie eine Programmoberfläche auszusehen hat, und welche Eingaben sie verarbeitet. Ein auf die Struktur der Steuertabellen abgestimmter, ansonsten aber allgemeingültiger Algorithmus wertet die Regeln aus, erzeugt die gewünschten Anzeige-Elemente auf dem Client, interpretiert die Benutzereingaben und leitet sie zur Ausführung an das Datenbanksystem weiter. Nach dieser Methode lassen sich alle gebräuchlichen Anzeige-Elemente eines Programms wie Programmfenster, Befehlsmenüs, Tabellen, Baumstrukturen und Dialoge generieren und mit Daten füllen.

Die Struktur der Steuertabellen und der Algorithmus, der ihre Inhalte interpretiert, sind insoweit allgemeingültig, als sie nicht auf ein bestimmtes Datenmodell oder eine bestimmte Funktionalität zugeschnitten werden, sondern eine ganze Klasse von Programmoberflächen auf beliebigen Datenmodellen mit beliebigen Funktionalitäten ermöglichen. Um das gewünschte Programm zu erzeugen, braucht der Anwendungsentwickler nur noch die Verarbeitungsfunktionalität auf dem Server zu programmieren. Für die Erzeugung der Programmoberfläche reicht es aus, Daten in die Steuertabellen einzutragen. Die auf diese Art erzielbare Komplexität von Programmoberflächen ist nur begrenzt durch die Komplexität des Regelwerks; das der Algorithmus interpretiert.

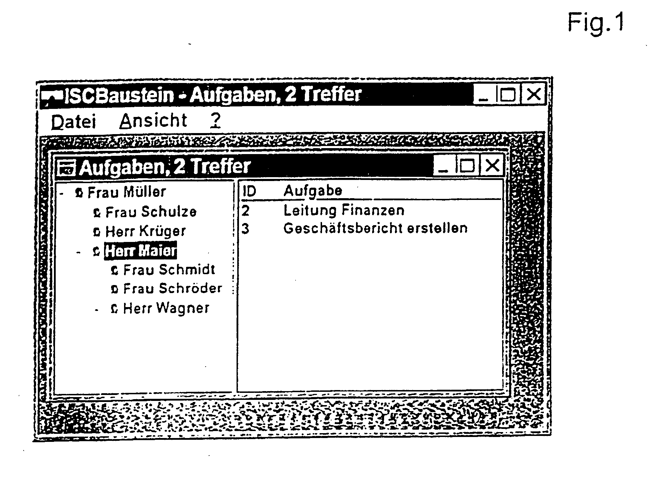

Das erfindungsgemäße Verfahren soll anhand eines durchgängigen Beispiels für einen "Explorer" erläutert werden. Der Explorer hat im Beispiel die Bezeichnung "Aufgaben", er enthält als Kontrollelemente eine Baumstruktur und eine Liste, wie in Figur 1 dargestellt.

Der Explorer soll die Baumstruktur anhand der Mitarbeiterhierachie aufbauen und immer, wenn in der Baumstruktur ein Knoten aktiviert wird (z.B. durch Anklicken), die Listenstruktur mit den Aufgaben des jeweiligen Mitarbeiters füllen.

Die Inhalte von Baum- und Listenstruktur werden anhand dieser Regeln aus Datentabellen geladen. Für unser Beispiel gehen wir von zwei Tabellen aus:

| Die Tabelle der Mitarbeiter: | | |
|---|---|---|
| **ID** | **NAME** | **ID VORGESETZTER** |
| 1 | Frau Müller | |
| 2 | Herr Maier | 1 |
| 3 | Frau Schulze | 1 |
| 4 | Herr Krüger | 1 |
| 5 | Frau Schmidt | 2 |
| 6 | Herr Wagner | 2 |
| 7 | Herr Bäcker | 6 |
| 8 | Frau Schröder | 2 |

Jeder Eintrag steht für einen Mitarbeiter, identifiziert durch eine eindeutige Nummer, repräsentiert durch den Namen, in die Hierarchie eingeordnet durch die eindeutige Nummer des Vorgesetzten.

| Die Tabelle der Aufgaben: | | |
|---|---|---|
| **ID** | **BEZEICHNUNG** | **ID_MITARBEITER** |
| 1 | Geschäftsführung | 1 |
| 2 | Leitung Finanzen | 2 |
| 3 | Geschäftsbericht erstellen | 2 |
| 4 | Buchhaltung | 5 |
| 5 | Kontierung | 5 |
| 6 | Monatsabschluß | 6 |
| 7 | Jahresabschluß | 6 |
| 8 | Umsatzsteuererklärung | 5 |
| 9 | Personalabrechnung | 8 |
| 10 | Leitung Anwendungsentwicklung | 3 |
| 11 | Vertrieb | 3 |
| 12 | Marketing | 3 |
| 13 | Projektierung | 4 |
| 14 | Projektplanung | 4 |
| 15 | Angebotserstellung | 4 |
| 16 | Datenerfassung | 7 |

Jeder Datensatz steht für eine Aufgabe eines Mitarbeiters, identifiziert durch eine eindeutige Nummer, repräsentiert durch eine Bezeichnung, dem Mitarbeiter zugeordnet durch dessen eindeutige Nummer.

Die in einer Programmoberfläche möglichen Anzeige-Elemente werden erfindungsgemäß durch Regeln bestimmt, die in Tabellen abgelegt werden. So können beispielsweise die in einem Programm verwendeten Baum- und Listenstrukturen in Tabellen eingetragen werden.

| Tabelle der Baumstrukturen | | |
|---|---|---|
| **ID** | **BEZEICHNUNG** | **BEMERKUNG** |
| 1 | Mitarbeiter | Baut die Struktur der Mitarbeiter auf |

| Tabelle der Listenstrukturen | | | |
|---|---|---|---|
| **ID** | **BEZEICHNUNG** | **BEMERKUNG** | **SELECT FROM** |
| 1 | Aufgaben | Baut die Liste der Aufgaben auf | PERSONAL.AUFGABEN |

Ebenso können die für das Programm vorgesehenen "Explorer" durch Einträge in einer weiteren Tabelle repräsentiert werden:

| Tabelle der "Explorer" | | | | |
|---|---|---|---|---|
| **ID** | **BEZEICHNUNG** | **ID_BAUM** | **ID_LISTE** | **SELECT_WHERE** |
| 1 | Aufgaben | 1 | 1 | ID_MITARBEITER=\%ID%\ |

Durch Struktur und Inhalte der Regel-Tabellen, aber auch durch die Inhalte der "Daten-Tabellen" wird eine Hierarchie der Anzeige-Elemente festgelegt: Jedes Anzeige-Element ordnet sich in die Hierarchie aller Objekte ein, es ist zusammen mit anderen Objekten einem übergeordneten Objekt zugeordnet. So sind die Baum- und Listenstruktur immer demjenigen Objekt untergeordnet, das den Explorer als Ganzes repräsentiert. Ebenso nimmt innerhalb einer Baumkontrolle jeder Knoten einen Platz in der Baumhierarchie ein. Nur das Applikationsobjekt hat kein übergeordnetes Objekt; es ist allen anderen Objekten übergeordnet.

Außer der für die Objekte geltenden Hierarchie wird durch die Regeln festgelegt, welche Eigenschaften ein Objekt hat. So hat im Beispiel jeder Knoten im Baum die Eigenschaften "Name", "Nummer", "Symbol" und "HatNachfolger".

Wenn der so definierte "Explorer" gestartet wird, werden auf der Grundlage der Regeln Objekte erzeugt, die die konkrete Ausprägung des Explorers und aller darin enthaltenen Anzeige-Elemente beschreiben. Die sichtbare Repräsentation ist der mit Daten gefüllte Explorer als Bestandteil der Programmoberfläche, die zugehörigen Objekte werden intern als Einträge in Listen repräsentiert. So entspricht der Explorer im in Figur 1 abgebildeten Zustand folgenden Listen:

| Aktive Explorer: | | | | |
|---|---|---|---|---|
| **ID** | **BEZEICHNUNG** | **ID BAUM** | **ID LISTE** | **SELECT WHERE** |
| 1 | Aufgaben | 1 | 1 | ID MITARBEITER=\%ID%\ |

| Darin enthaltene Baumstruktur: | |
|---|---|
| **ID** | **BEZEICHNUNG** |
| 1 | Mitarbeiter |

| Darin enthaltener oberster Knoten: | | | |
|---|---|---|---|
| **Text** | **ID** | **Symbol** | **HatNachfolger** |
| Frau Müller | 1 | 10 | 1 |

| Dessen Nachfolger: | | | |
|---|---|---|---|
| **Text** | **ID** | **Symbol** | **HatNachfolger** |
| Frau Schulze | 3 | 10 | 0 |
| Herr Krüger | 4 | 10 | 0 |
| Herr Maier | 2 | 10 | 1 |

| Nachfolger von Hr. Maier: | | | |
|---|---|---|---|
| **Text** | **ID** | **Symbol** | **HatNachfolger** |
| Frau Schmidt | 5 | 10 | 0 |
| Frau Schröder | 8 | 10 | 0 |
| Herr Wagner | 6 | 10 | 1 |

| Die im Explorer sichtbare Listenstruktur: | | |
|---|---|---|
| **ID** | **BEZEICHNUNG** | **SELECT_FROM** |
| 1 | Aufgaben | PERSONAL.AUFGABEN |

| Die in der Listenstruktur enthaltenen Einträge: | |
|---|---|
| **ID** | **BEZEICHNUNG** |
| 2 | Leitung Finanzen |
| 3 | Geschäftsbericht erstellen |

Neben den Inhalten der Listen muß der Algorithmus noch die hierarchische Ordnung der Listen untereinander verwalten.

Um die untergeordneten Objekte eines Anzeige-Elements zu erzeugen und zur Anzeige zu bringen, reicht es aus, die durch die Regeln festgelegten Datenbankinhalte abzufragen, daraus Listen zu bilden und diese durch allgemeingültig programmierte Algorithmen anzeigen zu lassen. Um z.B. einen Knoten eines Baums aufzuklappen, muß festgelegt sein, wie die Liste der untergeordneten Knoten aus der Datenbank abgefragt werden kann, z.B. durch folgende Tabellen:

| Knotentypen: | | | | | |
|---|---|---|---|---|---|
| **ID** | **BEZEICHNUNG** | **ID_ NACH- FOLGER** | **SELECT_FROM** | **SELECT_ WHERE** | **SELECT_ ORDER** |
| 1 | Unsichtbare Wurzel | 2 | PERSONAL. V_MITARBEITER | ID_VORGESETZTER IS NULL | NAME |
| 2 | Mitarbeiter | 2 | PERSONAL. V_MITARBEITER | ID_VORGESETZTER = \%ID%\ | NAME |

| Knoten-Eigenschaften: | | |
|---|---|---|
| **ID_KNOTENTYP** | **BEZEICHNUNG** | **FELDNAME** |
| 2 | Text | NAME |
| 2 | ID | ID |
| 2 | HatNachfolger | HAT_NACHFOLGER |
| 2 | Symbol | 10 |

Die Tabelle der Knotentypen beschreibt in diesem Beispiel zwei verschiedene Arten von Knoten: Die unsichtbare Wurzel des Baums und den Mitarbeiter-Knoten. Zu den Regeln gehört unter anderem der Name der Tabelle, aus der die Nachfolger im Baum abgefragt werden sollen, die Bedingung, die bei der Abfrage verwendet werden soll, der Feldname, nach dem die untergeordneten Knoten sortiert werden sollen, und der Knotentyp, den die untergeordneten Knoten haben.

Die Tabelle der Knoten-Eigenschaften legt für jeden Knotentyp fest, welche Eigenschaften alle Objekte dieses Typs haben. Im Beispiel hat die Wurzel keine Eigenschaften, Mitarbeiterknoten haben die Eigenschaften "ID", "Text", "HatNachfolger", und "Symbol". Zu den Regeln einer solchen Knoten-Eigenschaft gehört unter anderem der Ausdruck, mit dem die Eigenschaft aus der Datenbank abgefragt werden kann. Der Algorithmus setzt all diese Texte zu einer Abfrage zusammen und lädt so alle benötigten Objekte. Um die Wurzel des Baums zu öffnen, wird folgende Abfrage erzeugt (Im Beispiel in SQL-Syntax):
- SELECT: NAME,
ID,
HAT_NACHFOLGER,
10
- FROM: PERSONAL.V_MITARBEITER
- WHERE: ID_VORGESETZTER IS NULL
wobei V_MITARBEITER ein View ist, der ermittelt, ob ein Mitarbeiter Nachfolger hat, oder nicht. Dieser View ist folgendermaßen programmierbar:
- CREATE VIEW: V_MITARBEITER AS
- SELECT: M.NAME,
M.ID,
M.ID_VORGESETZTER
DECODE(COUNT(U.ID), NULL, 0, 1) HAT_NACHFOLGER
- FROM: MITARBEITER M,
MITARBEITER U
- WHERE: M.ID = U.ID_VORGESETZTER(+)
- GROUP BY: M.NAME,
M.ID,
M.ID_VORGESETZTER

Damit ein beliebiger Mitarbeiterknoten des Baums geöffnet werden kann, müssen bei der Konstruktion der Objekte auch die Eigenschaften des übergeordneten Objekts ausgewertet werden. Nach dem erfindungsgemäßen Verfahren werden dazu Platzhalter in den Regeln verwendet, die bei der Interpretation als Verweis auf die konkreten Eigenschaften des übergeordneten Objekts gelten. Um also einen Mitarbeiterknoten zu öffnen wird zunächst folgende Abfrage erzeugt:
- SELECT: NAME, ID, HAT_NACHFOLGER, 10
- FROM: PERSONAL.V_MITARBEITER
- WHERE: ID_VORGESETZTER = \%ID\

Anschließend werden alle Platzhalter anhand der Eigenschaften des übergeordneten Objekts ersetzt, also z.B. für den Knoten, der Herrn Maier repräsentiert:
- SELECT: NAME, ID, HAT_NACHFOLGER, 10
- FROM: PERSONAL.V_MITARBEITER
- WHERE: ID_VORGESETZTER = 7

Die dabei entstehende Liste wird nun in der Baumstruktur des Explorers zur Anzeige gebracht. Jeder Knoten bekommt als Beschriftung den Inhalt der Eigenschaft "Text", also den Namen des Mitarbeiters. Ob vor dem Namen eine Schaltfläche zum Aufklappen angezeigt wird, oder nicht, hängt vom Inhalt der Eigenschaft "HatNachfolger" ab. Das für die Anzeige verwendete Symbol wird aus der Eigenschaft "Symbol" ermittelt, im Beispiel ist es für alle Knoten gleich.

Das Konzept, Datenbankbefehle aus Regeln zusammenzusetzen, dabei Platzhalter durch Eigenschaften übergeordneter Anzeige-Elemente zu ersetzen, und so neue Anzeige-Elemente zu konstruieren, ist der zentrale Bestandteil des erfindungsgemäßen Verfahrens. Im Beispiel kann anhand der Steuertabellen für Listenstrukturen und Explorer (siehe oben) und der Tabelle der Spaltenbeschreibungen die Liste der Aufgaben eines Mitarbeiters erzeugt werden, sobald der Benutzer einen Mitarbeiter-Knoten anklickt.

| Tabelle der Spaltenbeschreibungen: | | | | |
|---|---|---|---|---|
| **ID_LISTE** | **ID** | **BEZEICHNUNG** | **FELDNAME** | **BREITE** |
| 1 | 1 | ID | ID | 150 |
| 1 | 2 | Aufgabe | BEZEICHNUNG | 400 |

Der für die Liste aus den Regeln generierbare Datenbankbefehl lautet:
SELECT ID, BEZEICHNUNG, ID_MITARBEITER
FROM PERSONAL.AUFGABEN
ORDER BY BEZEICHNUNG

Der Eintrag in der Explorer-Tabelle ergänzt diesen Befehl um eine Bedingung:
SELECT ID, BEZEICHNUNG, ID_MITARBEITER
FROM PERSONAL.AUFGABEN
WHERE ID_MITARBEITER = \%ID%\
ORDER BY BEZEICHNUNG

Der Platzhalter wird nun ersetzt durch die konkrete Eigenschaft "ID" des der Listenstruktur übergeordneten Anzeige-Elements (des angeklickten Knotens), so daß nur die Aufgaben dieses Mitarbeiters in die Listenstruktur geladen werden.

Nach dem gleichen Verfahren können auch alle anderen Anzeige-Elemente einer Programmoberfläche zur Laufzeit ermittelt werden (Programmrahmen, Befehlsmenüs, Dialogboxen, Dialogfelder, Schaltflächen, Charts...). Dazu reicht es aus, entsprechende Steuertabellen zu definieren, und einen -Algorithmus zu erstellen, der deren Inhalte und die Eigenschaften des übergeordneten Objekts so interpretiert, daß die gewünschten Anzeige-Elemente entstehen.

Um aufgrund von Benutzereingaben Aktionen auszuführen zu können, müssen die Regeln außerdem festlegen, wie Datenbankbefehle aufgrund der Eingaben zusammengesetzt werden, um die gewünschte Funktionalität zu bieten. So könnte der Explorer des Beispiels drei Schaltflächen "Neu", "Ändern" und "Löschen" enthalten, mit denen der Benutzer die Daten der Tabelle AUFGABEN modifizieren kann. Der Algorithmus müßte, wenn der Benutzer die Bezeichnung einer Aufgabe überschreibt und die Schaltfläche "Ändern" betätigt, aus den weiter oben bereits aufgestellten Regeln folgenden Datenbankbefehl zusammensetzen:
UPDATE PERSONAL.AUFGABEN
SET BEZEICHNUNG = `\%Text%\`
WHERE ID =\%ID%\

Vor der Ausführung werden dann die Platzhalter des Befehls ersetzt durch die Eigenschaften des Listeneintrags, auf den sich der Befehl bezieht.

Neben den elementaren Datenmanipulationsbefehlen (INSERT, UPDATE, DELETE) können auch komplexere Funktionen aufgerufen werden, die als Parameter bestehende Objekte oder Eigenschaften von Objekten verarbeiten.

So könnte eine Stored Procedure "BERECHNE_KOSTEN" als Parameter einen Mitarbeitereintrag aus der Baumstruktur erwarten. Immer wenn der Benutzer einen Mitarbeiterknoten angeklickt hat und aus dem (ebenfalls anhand von Regeln geladenen) Befehlsmenü den dazu vorgesehenen Befehl auswählt, würde der Algorithmus zuerst die Parameter bereitstellen - also den Verweis auf die Liste, die den Eintrag enthält und die laufende Nummer des Knotens innerhalb dieser Liste- und anschließend den Befehl
BERECHNE_KOSTEN (refListe, nEintrag),
an die Datenbank weiterleiten.

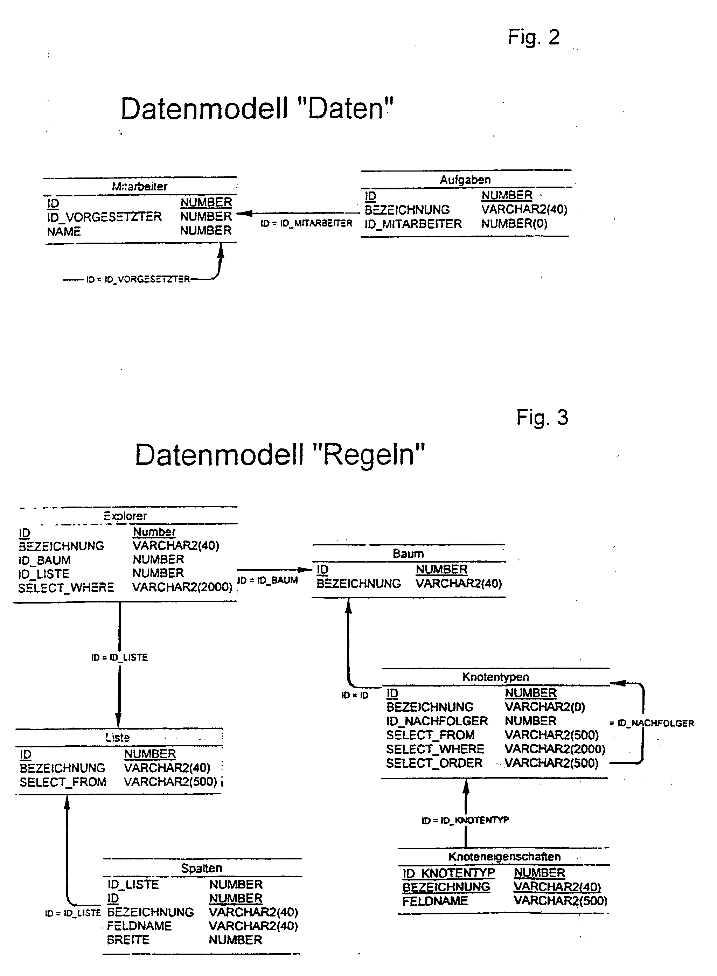

Figur 2 zeigt das Datenmodell der Daten, die der oben beschriebene "Explorer" verarbeiten soll. Es steht stellvertretend für in Unternehmen übliche, jedoch weitaus komplexere relationale Datenbanken, in denen die Geschäftsdaten gespeichert und verarbeitet werden.

Figur 3 zeigt das Datenmodell der Regelstruktur, wie sie auch in dem beigefügten Anspruch 2 beschrieben ist, wobei hier die in dem oben beschriebenen Beispiel verwendete Regelstruktur dargestellt ist. In der Praxis werden weitaus komplexere Regelstrukturen herangezogen, um entsprechend komplexe Programmoberflächen zu unterstützen.

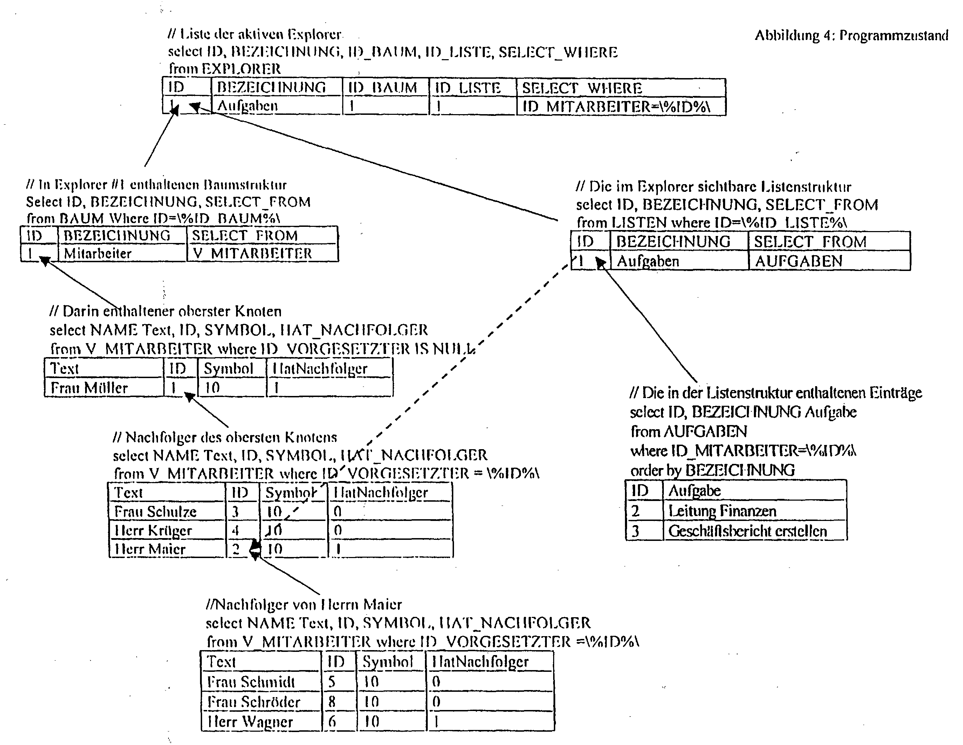

Figur 4 zeigt den Programmzustand der graphischen Benutzeroberfläche aus Figur 1. Die durchgezogenen Pfeile repräsentieren die Hierarchie gemäß Merkmal b des Anspruchs 1, der gestrichelte Pfeil repräsentiert die Beziehung gemäß Merkmal c des Anspruchs 1. Zum besseren Verständnis sind in Figur 4 oberhalb jeder Liste die Datenbankabfragen angegeben, mit denen die Listen wie in Anspruch 2 angegeben, unter Anwendung der Platzhalterersetzung aufgebaut werden können.

Die erfinderische Leistung der vorliegenden Erfindung ergibt sich demgemäß aus der Kombination einer Reihe von Techniken, nämlich
- der Speicherung von Regeln in einem relationalen Datenbankmodell
- dynamischer Generierung von Datenbankbefehlen
- Platzhaltersetzung in Datenbankbefehlen
- Verknüpfung von Anzeige-Elementen mit Feldern von Tabellen einer Datenbank
- Verwaltung einer Hierarchie von Listen als Repräsentation des Programmzustandes

Diese Merkmale werden erfindungsgemäß in Verbindung mit einer geeigneten Struktur von Regeln gebracht. Auf diese Art wird die Beschreibung einer graphischen Benutzerschnittstelle und ihrer Beziehung zu den verwalteten Daten und ihren Funktionen allein durch Tabelleneinträge möglich. Die Regeln können sozusagen als "formale Spezifikation" angesehen werden, die zur Laufzeit durch den allgemein gültigen Algoritmus interpretiert wird, der den jeweiligen Programmzustand allein dadurch erzeugt, daß er zusammengesetzte Datenbankabfragen ausführt. Hervorzuheben ist, daß die Datenbankabfragen erfindungsgemäß sowohl auf Regeldaten als auch auf die zu verarbeitenden Daten zugreifen, und diese in geeigneter Form verknüpfen.

Die verwendete Struktur der Regeln und die jeweilige Implementierung des allgemein gültigen Algorithmus legen zusammen die Klasse aller graphischer Benutzeroberflächen fest, die in dem jeweiligen Ausführungsbeispiel durch Regeln spezifiziert werden können. So ist die für das oben beschriebene Beispiel gewählte Struktur von Regeln relativ klein, sie erlaubt allerdings die Erstellung beliebiger Explorer, solange diese im linken Teil aus einem Baum, und im rechten Teil aus einer davon abhängigen Liste bestehen. Komplexere Regelstrukturen erlauben entsprechend komplexere graphische Benutzerschnittstellen. Für eine kommerzielle Nutzung der Erfindung könnte daher beispielsweise eine Regelstruktur erstellt werden, in der auch Dialogboxen, Comboboxen, Befehlsmenüs usw. spezifiziert werden können.
Der Nutzen der Erfindung besteht in der erheblichen Reduzierung sowohl des Aufwandes als auch des technischen Know How's, die nach dem heutigen Stand der Technik für die Erstellung einer graphischen Benutzerschnittstelle notwendig sind. Darüber hinaus legt die Erfindung die Implementierung des allgemein gültigen Algoritmus in Mehrschichtarchitektur nahe (beispielsweise in "Client Server" oder "3 Tier" Architektur). Der jeweilige Programmzustand läßt sich erfindungsgemäß nämlich zur Laufzeit auf einem Server generieren, und muß anschließend nur noch zum Client transferiert und dort zur Anzeige gebracht werden. Dadurch reduzieren sich vorteilhafterweise
- die auf dem Client benötigte Programmfunktionalität auf ein absolutes Minimum (Thin Client), das zudem allgemeingültig und damit von der jeweiligen graphischen Benutzeroberfläche unabhängig ist,
- der notwendige Nachrichtentransport zwischen Client und Server auf die für die Anzeige in der graphischen Benutzeroberfläche notwendigen Daten.

## Patentansprüche

1. Verfahren zur Erzeugung graphischer Benutzerschnittstellen für Computerprogramme, die vollständig aufgrund von in einer Datenbank abgelegten Regeln erzeugt werden, **dadurch gekennzeichnet, daß** jeder Programmzustand der graphischen Benutzerschnittstelle durch
a) eine Menge von Listen, die die Anzeige-Elemente und deren Inhalt repräsentieren,
b) eine hierarchische Ordnung, die den Einträgen in einer Liste aus der Menge von Listen andere, übergeordnete Listen aus der Menge von Listen zuordnet und so das "enthalten sein" von Anzeige-Elementen ineinander repräsentiert und
c) eine Beziehung zwischen den Einträgen in den Listen der Menge von Listen, die festlegt, welches Anzeige-Element von dem Inhalt welches anderen Anzeige-Elements abhängt,
festgelegt ist.

2. Verfahren nach Anspruch 1, **dadurch gekennzeichnet, daß** die Regeln eine Struktur bilden, die eine Programmspezifikation enthält, die von einem allgemein gültigen Algorithmus interpretiert wird, der
- Struktur und Inhalt der Menge von Listen für die graphische Benutzeroberfläche für jeden Programmzustand allein durch Datenbankabfragen aufbaut, die sowohl auf Regeldaten als auch auf die zu verarbeitenden Daten zugreifen, und deren syntaktische Zusammensetzung anhand der Regeln vorgenommen wird,
- dabei die hierarchische Ordnung zwischen den Listen aus der Menge der Listen aufrecht erhält,
- und bei Datenbankabfragen die Beziehung zwischen den Einträgen in den Listen der Mengen von Listen nutzt, um Platzhalter in den Datenbankabfragen durch Inhalte des übergeordneten Anzeige-Elements zu ersetzen.

3. Verfahren nach Anspruch 2, **dadurch gekennzeichnet, daß** der allgemeingültige Algorithmus aufgrund von Benutzereingaben den Programmzustand so verändert, wie er durch die durch die Regeln gebildete Struktur und den Inhalt der Regeln sowie durch seine eigene Implementierung vorgesehen ist.

## Claims

1. Method for the generation of graphical user interfaces for computer programs which completely are generated on the basis of rules stored in a data base, **characterised in that** each state of the program of the graphical user interfaces is defined by
a) a set of lists representing the display elements and the contents thereof,
b) an hierarchical order, associating the entries in a list of the set of lists with other superior lists of the set of lists and such is representing the "being contained" of display elements within an other and
c) a relationship between the entries in the lists of the set of lists which is defining which particular display element is depending from the contents of which other display element.

2. Method according to claim 1, **characterised in that** the rules are forming a structure containing a program-specification which is interpreted by a generally valid algorithm which
- is building structure and contents of the set of lists for the graphical user surface for each program state exclusively by data base enquiries, which are making assess to the rule data as well as to the data to be processed, wherein the syntactical composition thereof is done on the basis of the rules,
- doing so is maintaining the hierarchical order between the lists of the set of lists,
- and is using during data base enquiries the relationship between the entries in the lists of the set of lists to substitute stand-in's in the data base enquiries by contents of the superior display element.

3. Method according to claim 2, **characterised in that** the generally valid algorithm is changing the program state on the basis of user inputs in such a way as this is provided by the structure formed by the rules and the contents of the rules as well by its own implementation.

## Revendications

1. Procédé de production d'interfaces utilisateur graphiques pour programmes d'ordinateur, qui sont entièrement produites sur la base de règles enregistrées dans une banque de données, **caractérisé en ce que** chaque état de programme de l'interface utilisateur graphique est défini par
a) une quantité de listes qui représentent les éléments d'affichage et leur contenu,
b) un ordre hiérarchique qui affecte aux enregistrements dans une liste parmi la quantité de listes, d'autres listes d'ordre supérieur parmi la quantité de listes et représente ainsi le fait que des éléments d'affichage « soient contenus » dans d'autres, et
c) une relation entre les enregistrements dans les listes parmi la quantité de listes, qui définit quel élément d'affichage dépend du contenu de quel autre élément d'affichage.

2. Procédé selon la revendication 1, **caractérisé en ce que** les règles forment une structure qui contient une spécification de programme, laquelle est interprétée par un algorithme de validité générale, lequel
- organise la structure et le contenu de la quantité de listes pour la face utilisateur graphique pour chaque état de programme, uniquement par des interrogations de la banque de données, lesquelles accèdent aussi bien aux données de règle qu'aux données à traiter, et dont la composition syntaxique est effectuée à l'aide des règles,
- l'ordre hiérarchique étant maintenu ici entre les listes parmi la quantité de listes,
- et utilise pour les interrogations de la banque de données la relation entre les enregistrements dans les listes parmi la quantité de listes, pour remplacer des garde-places dans les interrogations de la banque de données par des contenus de l'élément d'affichage d'ordre supérieur.

3. Procédé selon la revendication 2, **caractérisé en ce que** l'algorithme de validité générale modifie l'état de programme, sur la base d'entrées utilisateur, tel qu'il est prévu par la structure formée par les règles, ainsi que par le contenu des règles et par sa propre mise en application.
